# EUROPEAN PATENT APPLICATION

(11) **EP 0 551 928 A1**
(43) Date of publication of application: **21.07.1993**
(21) Application number: 93103031.6
(22) Date of filing: 28.05.1988
(51) Int. Cl.: B64D 15/16

(54) **De-icer**

(30) Priority: 16.07.1987 US 74107; 16.07.1987 US 74209; 16.07.1987 US 74196
(62) Divisional of application: 88108571.6
(71) Applicant: THE B.F. GOODRICH COMPANY, Akron Ohio 44313-1799 (US)
(72) Inventor: Briscoe, James A., Doylestown, Ohio 44230 (US); Leffel, Kevin L., Akron, Ohio 44319 (US); Phillips, Ronald W., Sellersville, Pennsylvania 18960 (US); Putt, James C., Doylestown, Ohio 44320 (US); Tenison, Gary V., New Brighton, Minnesota 55112 (US)
(74) Representative: Selting, Günther, Dipl.-Ing.

(57) **Abstract**

A de-icer for de-icing ice accreting surfaces of a skin (12,12') formed of a material having a substantially elevated modulus, wherein a principal inflation tube (14) and additional inflation tubes (17) are positioned between a support surface (16) and a surface of the skin (12) obverse to the ice accreting surface. The principal inflation tube (14) and the additional inflation tubes (17) are inflated to produce a deformation in the skin sufficient to detach and dislodge accumulations of ice on the ice accreting surface but insufficient to exceed an endurance limit for the material from which the skin is formed. Fluid under pressure employed to inflate the principal inflation tube is used to inflate the additional inflation tubes. The invention finds use in de-icing aricraft surfaces such as wings, tail surfaces, propellers, rotors such as rotating wings, tails rotors and nose cones.

## Description

This invention relates to an apparatus for de-icing leading edges. More particularly, this invention pertains to the de-icing of aircraft leading edge surfaces such as are associated with wings, struts, stabilizers, and propellers. Specifically, this invention relates to pneumatically actuated de-icers for use on leading edges.

Since the early days of powered aviation, aircraft have been, from time to time, troubled by accumulations of ice on component surfaces of the aircraft such as wings and struts, under certain flight conditions. Unchecked, such accumulations can eventually so laden the aircraft with additional weight and so alter the aerofoil configuration of the wings as to precipitate an unflyable condition. A search for means to combat the accumulation of ice under flying conditions has been a continuing one and has resulted in three generally universal approaches to removing accumulated ice, a process known generically as de-icing.

One form of de-icing, leading edges, that is edges of the aircraft component on which ice accretes and are impinged upon by the air flowing over the aircraft and having a point at which this airflow stagnates, is typically termed mechanical de-icing. In the principal commercial mechanical de-icing means, pneumatic de-icing, the leading edge zone of a wing or strut component of an aircraft is covered with a plurality of expandable, generally tube-like structures inflatable employing a pressurized fluid, typically air. Upon inflation, the tubular structures tend to expand substantially the leading edge profile of the wing or strut and crack ice accumulating thereon for dispersal into the airstream passing over the aircraft component. Typically, such tube like structures have been configured to extend substantially parallel to the leading edge of the aircraft component. For aerofoils such as wings and stabilizers, these structures may extend the entire span of the aerofoil. A plurality of tube-like structures frequently are positioned on a wing or strut and typically are configured to be parallel to the leading edge of the wing or strut as by placement of a spanwise succession of tubes spaced in chordwise manner away from the leading edge. The plurality of tubes can provide an ice removal function to the entire leading edge profile of the aerofoil or strut.

Conventionally, pneumatic de-icers are formed from a compound having rubbery or substantially elastic properties. Typically, the material forming tubes on such de-icer structures can expand or stretch by 40% or more during inflation cycles causing a substantial change in the profile of the de-icer (as well as thereby the leading edge) and thereby cracking ice accumulating on the leading edge. At least in part because of the large volume of air required for inflating such highly expandable tubes, the times for inflating such tubes have typically historically averaged between about 2 and about 6 seconds. The distortion engendered in an aerofoil profile by inflation of the tubes can substantially alter the airflow pattern over the aerofoil and can adversely effect lift characteristics of the aerofoil.

The rubber or rubber like materials forming these conventional pneumatic de-icers typically are possessed of a modulus of elasticity of approximately 6900 kPa. Ice, as is well known, is possessed of an elastic modulus enabling typical ice accumulations to adjust to minor changes in contours of surfaces supporting such ice accumulations. The modulus of elasticity for ice is variously reported as being between about 275,000 kPa and about 3,450,000 kPa. The modulus of elasticity of rubber compounds used in conventional de-icers however is substantially different from the modulus of elasticity typically associated with ice accumulations, and the large, 40% or greater expansion undergone by the de-icer during inflation traditionally has functioned to crack or rupture the structure of the ice accumulations thereon allowing such accumulations to be swept away by impinging wind streams.

Ice accumulations, in conforming to minor alterations in the contours of surfaces supporting the ice accumulations do so only somewhat slowly. The phenomenon by which ice accumulations conform to changing contours of support surfaces in some ways may resemble the phenomenon of cold flow in thermoplastic materials. Where the ice accumulations are exposed to extremely rapid but minor deformations, an ice coating cannot accommodate such contour changes sufficiently rapidly and shatters as though struck with a hammer. More recently, it has been discovered that subjecting leading edges of a wing or a stabilizer to electromechanical induced hammering, such as is shown by US-A-3,549,964, can assist in removing accumulations of ice on the leading edge. Concern respecting the susceptibility of such leading edges to stress fatigue upon being hammered over extended periods of time as yet have functioned in part to preclude substantial commercial development of such electromechanical hammering schemes.

A means for de-icing a leading edge not requiring the application of electrothermal de-icers and/or not requiring the application of pneumatic de-icers which, during the the inflated state, substantially distort the leading edge profile for an extended period of time thereby interfering with the efficient performance of a device associated with the leading edge could find substantial application in industry. Additionally, where such a means for de-icing a leading edge does not pose a significant likelihood for long term structural damage associated with stress or fatigue such as may be associated with electromechanical hammering, such a de-icing means could find substantial commercial utility.

The present invention provides a method and an apparatus for de-icing ice accreting surfaces and finds particular utility in the de-icing of aerofoil leading edges, struts and the like associated with aircraft.

EP-A-0 235 542 which is not prepublished discloses a de-icer which includes a sheet-like skin possessed of a substantially elevated modulus and formed into a desired configuration having an ice accreting surface associated therewith. The de-icer further includes a support surface separate and apart from the skin and positioned obversely with respect to the ice accreting surface.

A principal inflation tube is positioned between the support surface and the skin. A means is provided for introducing a fluid under pressure into the principal inflation tube in a quantity sufficient to inflate the principal inflation tube to a desired extent at which desired deformation of the skin occurs to a degree sufficient to detach and then dislodge or expel ice accumulations upon the ice accreting surface. Yet inflation is not accomplished to an extent sufficient to exceed a stress level characterizing an endurance limit for the material forming the skin. A means is provided for subsequently deflating the principal inflation tube.

In the apparatus according to the invention it is novel that the means for introducing the fluid under pressure into additional inflation tubes perform the introduction by passing fluid under pressure employed to inflate the principal inflation tube into the additional inflation tubes without exceeding a stress level corresponding to an endurance limit associated with the material forming the skin.

The additional inflation tubes of the de-icer of the invention are positioned between the support surface and the skin and configured, likewise, for inflation to an extent sufficient to deform the skin to a degree sufficient to dislodge ice accumulations upon the ice accreting surface thereover without exceeding stress endurance limit for the material from which the skin is formed.

In the practice of the invention, the principal inflation tube or tubes typically are formed from at least one ply of a fabric coated on at least one surface with a rubberizing or plasticizing compound, and formed with vulcanizably cured or thermoplastically molded as is appropriate to define the principal inflation tube. Typically, any principal inflation tube is affixed to the support surface.

In the practice of the invention, it may be desirable to include a ply positioned intermediate the skin and the support surface to lie between the principal inflation tube and the skin. The additional inflation tubes may be attached to this intermediate ply and configured to lie either between the intermediate ply and the skin or between the intermediate ply and the support surface.

In the practice of the invention, the principal inflation tube or tubes are interconnected with the additional inflation tubes whereby a fluid under pressure employed to inflate the principal inflation tube thereafter passes into and is employed to inflate the additional inflation tubes. In the practice of the invention, the principal inflation tube(s) are inflated to the desired extent within not more than 0.25 seconds. Where the principal inflation tube(s) are joined to the additional inflation tubes for inflation of the additional inflation tubes employing the fluid under pressure used to inflate the principal inflation tube(s), following inflation of the principal inflation tube within the 0.25 seconds, the additional inflation tubes typically become inflated more slowly and can function thereby to partially de-pressurize the principal inflation tube(s) if desired.

In certain preferred embodiments a pulse of fluid partially inflates the principal tube(s) causing the high modulus skin to dislocate and the stop suddenly. Momentum imparted to the ice accumulations thereby causes additional ice movement which assists in ice detachment and dislodgment. Additional further inflation in staged pulses can further enhance effective ice removal. Use of a valve for inflation characterized by a chattering mode of operation can be effective in achieving such a "start-stop" inflation pattern.

Typically, the skin is an outer skin defining a leading edge of an aerofoil such as an aircraft wing, aileron, propeller, rotating wing such as a helicopter rotor or tail rotor. The skin preferably is formed of titanium, aluminum, steel, including stainless steels, high modulus polymers, and elevated modulus polymeric composites, all elevated modulus materials.

In the method of EP-A-0 235 542, a principal inflatable tubular structure is periodically inflated and deflated in a cavity between the skin and the support surface for the principal inflatable tubular structure. Inflation is accomplished employing a fluid under pressure. The inflatable tubular structure is pressurized to a sufficient extent to detach and dislodge accreted ice but insufficiently pressurized whereby stresses placed upon the skin do not exceed an endurance limit for the material from which the skin is formed.

In the method according to the invention it is novel that the inflation of the additional inflation tubes is carried out by passing fluid under pressure employed to inflate the principal inflation tube into the additional inflation tubes.

In preferred embodiments of the invention a pair of principal tubular structures are inflated between the support surface and the skin, the principal tubular structures being spaced apart one from the next to an extent sufficient to assure that upon inflation, bending distortion of the skin by reason of such inflation does not exceed a microstrain characterizing a substantial likelihood of fatigue failure for the skin within a million inflation/deflation cycles of the tubes.

Preferably, an additional plurality of tubes between the support surface and the skin are inflated in co-ordinated manner with the principal inflation tube to produce a distortion of the skin thereover sufficient to detach and dislodge accumulations of ice thereon. In certain preferred embodiments of the invention, the inflatable tubular structures are inflated within not more than about 0.10 seconds and preferably not more than about 0.50 milliseconds. Pulsating inflation is contemplated as within the purview of the invention.

The above and other features and advantages of the invention will become more apparent when considered in light of a description of a preferred embodiment of the invention together with drawings which follows forming a part of the specification.

Fig. 1 is a cross-sectional view of an aircraft wing incorporating a de-icer in accordance with the invention.

Fig. 2 is s control schematic for controlling activation of de-icers in de-icing a surface in accordance with the instant invention.

Fig. 3 is a schematic of an inflation tube arrangement.

Fig. 4 is an alternate of an inflation tube arrangement.

The present invention provides an apparatus for de-icing a leading edge surface. By "de-icing" what is meant is the removal of ice subsequent to formation of the ice upon the leading edge. By "leading edge" what is meant is that portion of a surface of a structure which functions to meet and in substantial measure break, an airstream impinging upon the structure. Examples of leading edges would be forward edge portions of wings, stabilizers, struts, nacelles, propellers, rotating wings such as helicopter rotors, tail rotors and other housings, objects and protrusions first impacted by an airstream flowing over an aircraft in flight as well as spars, struts and other structural elements of marine vessels, towers and buildings.

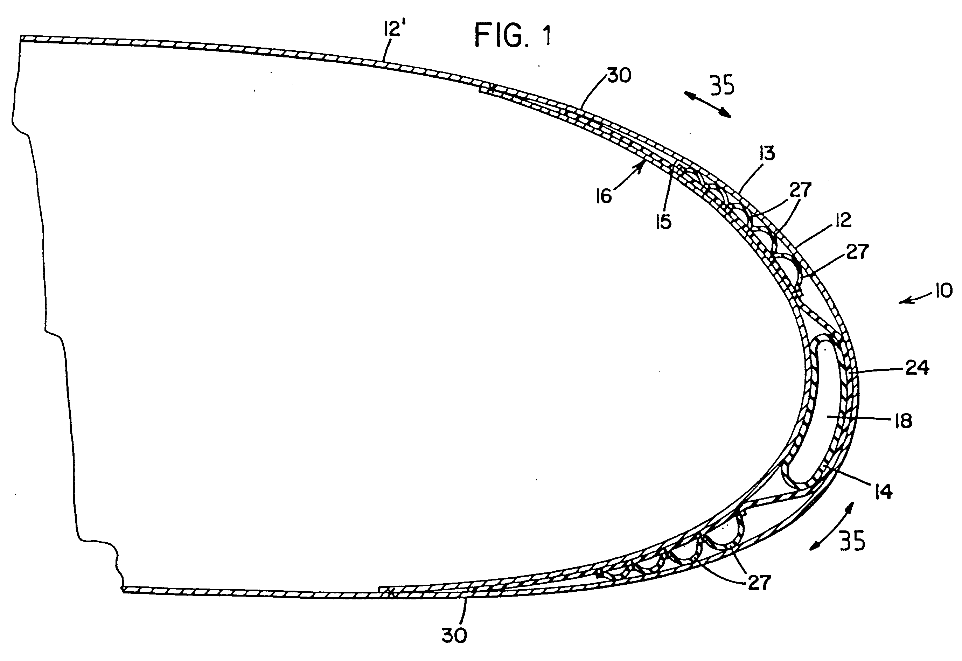

Referring to the drawings, Figure 1 depicts one embodiment of an aircraft wing leading edge de-icer 10 in accordance with the invention.

The de-icer 10 includes an outer layer or skin 12 formed of a substantially rigid material such as a plastic or metal having a substantially elevated modulus of elasticity or so-called Young's modulus. This modulus of elasticity should be at least 40,000 kPa. Preferably this modulus of elasticity approaches or exceeds the modulus of elasticity associated with ice accumulating upon the leading edge, so that preferably this modulus of elasticity is at least 275,000 kPa. In most preferred embodiments it is believed that this modulus of elasticity may extend to encompass about 7,500,000 kPa or greater.

A principal inflatable member 14 and a support surface 16 are provided with the principal inflatable member 14 typically being affixed by adhesion or other suitable or conventional means of the support surface 16. It should be apparent that the outer skin 12 can be formed as part and parcel of an aircraft skin 12' defining the outer contour of the wing, can be attached to the aircraft skin 12', or can be separately attached to the aircraft with the support surface 16 instead being part and parcel of the aircraft skin 12'. In the embodiment of Fig. 1, the de-icer skin 12 is shown as part and parcel, that is a continuation of, the aircraft skin 12'.

The principal inflatable member 14 is a tube-like structure typically running the length of the de-icer 10 and formed of a fabric material coated on at least one surface with a rubberizing or plasticizing compound. The tube 14 is formed so that the surface coated with the rubberizing or plasticizing compound faces outwardly from the center of the inflatable member 14 and therefore defines inflation chamber or cavity 18 within the tubular member 14. Suitable materials and techniques for the forming of tubular members from rubberized and plasticized fabric are known in the art of rubberized and plasticized fabric working. An inflation conduit is provided fluid communication with the inflation chamber 18 in suitable or conventional manner.

The inflation tube can be stitched to provide a pair of parallel inflation chambers with fluid communication therebetween via the stitching. Where the stitching is sealed or an adhesive or chemical bond is substituted for the stitching a pair or parallel inflation tubes result.

Referring again to Fig. 1, an upper intermediary ply 24 is positioned beneath the skin 12. The ply is suitably formed of a fabric material coated on one surface with a rubberizing or plasticizing coating compound in well-known manner. In the upper intermediate ply 24, the rubberizing or plasticizing coating faces in a direction outwardly towards the skin 12 arid the ply 24 is bonded to the skin 12.

The fabric employed in the intermediate ply may be of any suitable or conventional nature. Preferably a rayon, polyester, aramid, nylon or acrylic fiber-based fabric is employed. The rubberizing or plasticizing compound can be of any suitable or conventional nature such as natural, synthetic, styrene-butadiene or chloroprene rubbers and plasticizing thermoplastic or plasticizing thermosetting resins at these terms are known in the art and useful mixtures thereof, all as suitable for bonding to the outer skin 12 or to other structural components of the de-icer 10.

Appropriate rubberizing compounds and plasticizing compounds are well-known in the rubber and/or plastic compounding field.

The principal inflatable member 14 is of a size and shape such that when inflated to a desired pressure, typically between about 69 and 276 kPa, the outer skin 12 is deformed above the tubular member to an extent of not more than about 0.5 centimeters and preferably not more than approximately 0.25 centimeters. The actual distortion required is in part a function of the physical configuration for de-icer 10 and the nature of ice deposits formed thereon. Typically such distortions are desirable in a range of between 0.1 and 0.35 centimeters. By deformed or distorted what is meant is movement of a point on the de-icer 10 outer skin 12 from a physical location while the principal inflation tube is placid to a physical location once the principal inflation tube has been inflated to the desired extent and pressure.

Distortion of the outer skin pursuant to inflation of the principal tubular member 14 produces chordwise strain depicted in Figure 1 by lines 35 in the outer skin 12. This distortion and the accompanying chordwise strain eventually reaches a point where stresses develop at the interface between ice and the outer skin 12 which stresses serve to break the adhesive bond of the ice to the skin thereby detaching the ice, and develop cohesive fractures in the ice itself due, it is believed, to an inability of the ice to accommodate rapidly strain to the extent of the rapidly induced strain in the skin 12 to which the ice is attached. At the same time the inflation action produces a distortion motion in the skin 12 and ice and momentum thereby is applied to the ice. As the skin stops moving when inflation is completed, the ice momentum functions to dislodge and eject the detached ice from the skin 12.

Where inflation is accomplished slowly, insufficient momentum may not be imparted to the ice to secure dislodgment or ejectment of the detached ice absent the existence of additional forces. Such forces can include centrifugal force associated with motion of propellers or rotating wings and tail rotors or distortional turbulence in an airstream impinging the leading edge.

The chordwise strain depicted by the lines 35 in Figure 1 imparts a certain, very limited stretching motion in the outer de-icer skin 12. Stretching in the outer skin 12 is limited because, unlike conventional pneumatic de-icers, the outer skin is possessed of a high modulus elasticity. High modulus considerations are not important with respect to the rubberized intermediate ply 24, 26, if used, which is intended to be substantially low modulus. Modulus considerations are very important however for the outer skin 12 and typically are important for the support layer 16 which are both intended to be formed of material having a substantially high modulus. Accordingly, the outer skin is formed of a substantially high modulus material having an ultimate elongation necessarily greater than that of the ice accumulations preferably greater than about 1/4% and most preferably greater than about 1/2%. By ultimate elongation what is meant is the percentage of permanent deformation remaining after tensile rupture. The operational elongation to which the outer skin 12 is subjected, that is elongation strain associated with routine, ordinary operation of the de-icer, as a result of chordwise strain represented by the lines 35 in Figure 1 should be comfortably less than the ultimate elongation inherent to the material forming the outer skin 12 defining the outer surface of the de-icer. Where the operational elongation exceeds the ultimate elongation, premature and potentially catastrophic failure of the outer skin 12 may occur. Equally important, the operational elongation should not induce or effect a strain as depicted by the lines 35 in excess of a strain associated with early fatigue failure of the material forming the skin, again to avoid premature and possibly catastrophic failure.

Likewise, the support ply 16 or layer must be formed of substantially high modulus materials to assure against detrimental or deleterious deformation of the support ply during inflation of the principal inflation tube 14 and leading therefore to a failure to adequately strain the outer skin 12.

The outer skin 12 may be formed from suitable or conventional materials such as metals or plastics. Thin sheets of stainless steel, annealed stainless steel, thin sheets of titanium or annealed titanium and to a lesser extent aluminum are of great utility in the practice of the invention as having a very desirable Young's modulus. Plastics having the characteristic of a high modulus of elasticity or Young's modulus and a suitable ultimate elongation find utility in forming an outer skin.

By "thin" what is meant is 0.00254 to about 0.0254 centimeters for metals and 0.008 centimeters to 0.0508 for non metals. One plastic material finding particular use in the practice of the invention is polyetheretherketone (Peek) available from ICI. Other suitable or conventional plastic material such as polycarbonates, acetals, nylons, polyesters, polyvinyl fluorides, polyethylenes, epoxy resins formed into composites as well as phenolic resins formed into composites and the like can be employed in the practice of the instant invention. Such materials will possess an ultimate elongation greater than about 3.0% and preferably greater than about 5.0% and an elastic modulus or Youngs modulus of at least about 40,000 kPa and preferably at least about 275,000 kPa but up to about 7,500,000 kPa or more. The use of certain polymeric materials in lieu of metals in forming the skin 12 may be advantageous due to a lower tendency for ice to adhere to such polymeric materials. The outer skin 12 of the de-icer 10 can define a structural leading edge, thus performing a dual role.

While it had previously been a generally accepted postulation that high modulus materials must by their nature require de-icing employing an extremely rapid deformation, it is a feature and advantage of the present invention that deformation can be accomplished at a more measured pace. Accordingly, and surprisingly, inflation rates or times characterizing priorly known highly elastic pneumatic de-icers mounted upon ice accreting surfaces of wings can also be employed with respect to the principal inflation tube 14 associated with the instant invention. The strain placed thereby upon the skin 12 is sufficient to detach and assist in dislodging ice accumulations thereon notwithstanding the substantially elevated modulus of elasticity associated with the skin 12. The presence of additional forces such as rotational motion of the leading edge or turbulent disturbances in the airstream flowing over the leading edge may be required to assure a complete dislodging of all ice so detached. These results would appear to be contrary to all the prior teachings in the art with respect to de-icing as a function of gradual deformation of an ice accreting surface.

In the practice of the invention, it is of course equally possible that the principal inflation tube be inflated in such a manner that deformation of the outer skin 12 to a degree sufficient to discharge ice accumulations thereon can be accomplished in less than the about 0.25 seconds associated with ordinary pneumatic de-icers, more particularly in less than 0.10 seconds, preferably less than 50 milliseconds, and most preferably less than 20 milliseconds. Pulsating inflation has been particularly effective where shorter inflation times are employed. Particularly where centrifugal or turbulent airflow forces, for example, are available, it is not essential that inflation of the principal inflation tube 14 to the desired extent to effect detachment and discharge of ice upon the skin 12 be accomplished in less than the time ordinarily associated with the inflation and deflation cycle of a conventional pneumatic de-icer. While both rapid and more leisurely inflation cycles can function to remove ice accumulations of a thickness of 0.6 centimeters or less, it has been found that ice accumulations of less 0.05 can, surprisingly, be effectively removed by a relatively slower inflation/deflation cycle for the principal inflation tube 14 much akin to the more rapid inflation mode where the inflation tube is inflated to a desired extent in a relatively short period of time such as less than 0.10 seconds, preferably less than 50 milliseconds or most preferably less than 20 milliseconds. While such very short inflation/deflation cycles can function to, in the vernacular, blast rather thick ice accumulations from the outer skin 12, it has been found that a slower inflation/deflation cycle may be under many circumstances, as effective in removing very thin ice layers. Such removal is particularly advantageous where additional forces are present such as in conjunction with propeller or rotating wing de-icing.

Typically, pressurized fluid is introduced along a conduit in well-known manner to the principal inflation tube 14. Where a source of fluid, such as air, under pressure is employed via the conduit to inflate the tubular inflation chamber 18, the source of fluid under pressure can be regulated to provide a fluid pressure not greater than that necessary to achieve a desired degree of inflation to effectively remove accumulations of ice from a surface 13 of the de-icer 10. For rapid inflation modes, preferably a source of fluid under pressure greater than the pressure normally associated with desired full and final inflation of the principal tubular member 14 can be employed. Where such higher pressure fluid sources are employed, it is typically advantageous to include a positive means for preventing over-inflation/pressurization of the principal tubular member 14 thereby forestalling structural damage to the support surface 16 and the outer akin 12. Fluid under pressure can be provided in any suitable or conventional manner such as by an air compressor (not shown) or compressed gas cylinder (not shown) aboard an aircraft.

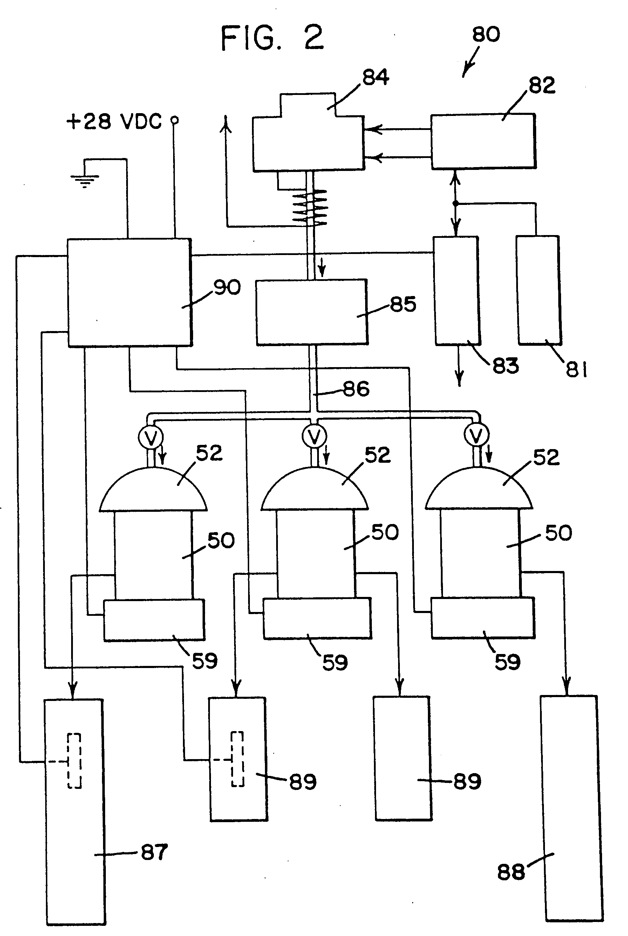

In the event it is desired that the tubular inflation chamber 14 be inflated quite rapidly, that is in preferably less than about 0.10 seconds, rapid inflation can be accomplished employing a source of high pressure air and a control schematic as shown in Fig. 2. Referring to the drawings, Fig. 2 depicts a schematic for a system 80 in accordance with the invention for de-icing wings and horizontal stabilizers of an aircraft. The system 80 includes a source 81 of low pressure air such as a compressor or a bleed from a jet engine turbine stage. The source 81 is joined to regulators 82,83 for assuring a constant supply pressure of the low pressure air source. The regulator 83 is configured to supply low pressure air to an ejector; the regulator 82 is configured to supply an intensifier 84. A suitable intensifier is disclosed in US-A-4 807 515.

High pressure air in the main accumulator 85 is available through suitable conduits 86 to accumulators 50 associated with pilot valves 52. The high pressure air from the accumulator 50 is then made available to individual wing and stabilizer de-icers 87,88,89 having principal inflatable members 14 such as are depicted in Fig. 1.

A control device 90 functions to control the activation of the solenoids 59 associated with the pilot operated valve 52 whereby timed release of high pressure air to the principal inflatable members 14 of the de-icers 87,88,89 can be accomplished. Such control can be accomplished in well-known fashion.

It should be understood that the system 80 depicted in Fig. 2 is exemplary only, and that various modifications and alterations may be made thereto in accommodating particular de-icer configurations and the physical valving configurations necessary to supply fluid under pressure thereto. In particular, the low pressure source 81 of air can be replaced by a high pressure source of air such as from a compressor (not shown) or a storage gas bottle (not shown) whereupon the intensifier 84 may become superfluous. Also, the vacuum regulator 83 and the regulator 82 may consist of a single unit supplying low pressure air for vacuum production and for intensification.

Referring to Fig. 1, the embodiment of the invention has an ice accreting surface 13, and an obverse surface 15. The intermediate ply 24 lies between the support surface 16 and the obverse surface 15 of the skin 12. No intermediate ply is employed. The principal inflation tube 14 lies between the intermediate ply 24 and the support surface 16.

In Fig. 1 a plurality of additional inflation tubes or tubular members 27 are provided between the intermediate ply 24 and the obverse surface 15. The additional tubular members 27 are configured to, upon inflation, exert de-icing stresses upon the outer skin 12 immediately thereover. The additional tubular members 27 can be of any suitable or conventional nature and typically are formed in a manner similar to the inflation tube 14.

Referring to Figure 1, it should be apparent that the additional tubular members 27 need not lie between the intermediate ply 24 and the skin 12 obverse surface 15, but rather could lie between the support surface 16 and the intermediate ply 24. It should be apparent that the intermediate ply 24, depending upon the desired configuration, may not be necessary, and therefore both the principal tubular member 14 and the additional tubular members 27 can lie or be positioned or affixed upon the support surface 16 for direct contact and interaction with the outer skin 12 obverse surface 15.

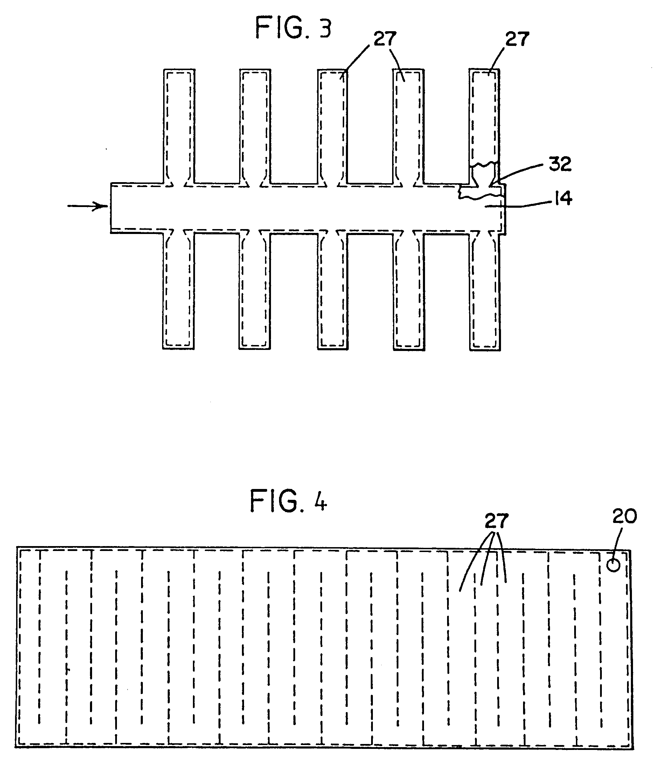

Referring again to the drawings, Figure 3 is a representation of a means suitable for inflating the additional tubular members 27. The additional tubular members 27 are configured in fluid communication with the principal inflatable principal tubular member 14 whereby fluid inflating the tubular member 14 can thereafter fill and inflate the additional tubular members 27. Where it is desired that fluid under an elevated pressure be employed to inflate the principal inflatable tubular member 14, it is desirable that the passageway 32 for each additional tubular member 27 be configured to restrict the flow of fluid into the additional inflatable tubular members 27 so that the principal inflation tube 14 can inflate virtually instantaneously with a pressure "snap" prior to significant inflation of the additional tubular members 27. The sizing of a particular restricted passageway 32 is within the purview of one skilled in the art of fluid dynamics.

Referring to Figure 3 it should be readily apparent that the additional inflatable tubular members 27 need not be inflated employing fluid derived from a filling of the principal inflatable tubular member 14. Referring to Figure 3 the additional inflatable tubular members 27 can be each inflated employing the source of fluid under pressure through a separate inflation conduit 20 in well-known manner or may be joined to a header (not shown) supplied with fluid under pressure from a source thereof also in well-known manner. The selection of a particular means for inflating the additional tubes 27 is at least in part a function of weight considerations, orientation of the additional tubes 27 with respect to the principal inflation tube 14 (that is whether generally paralleling or lying generally perpendicular to the principal inflation tube), and the nature and manner in which the principal inflation tube 14 is to be inflated as well as the sequence, if any, in which the principal inflatable tubular member 14 and the additional inflatable tubular members 27 are to be inflated.

In operation, the de-icer of the invention is inflated and deflated in a cyclical manner to remove ice accumulation on the ice accreting surface 13. Typically, a time-period often many times longer than the inflation/deflation cycle for the principal inflatable tubular member 14 is provided between discrete inflation periods for the principal inflatable tubular member 14. In other embodiments, it may be desirable alternately to inflate and deflate the principal inflatable tubular member 14 virtually continuously or to inflate the principal inflatable member 14 in small spurts or surges. Generally the longer the time period between inflation cycles for the principal tubular member 14, the greater an ice accumulation thickness developing upon an ice accreting surface 13 and requiring removal. Of course with greater ice accumulation thicknesses generally goes a greater interference with efficient aerofoil performance.

The additional inflatable tubular members 27 may be inflated concurrently with the principal inflatable tubular member(s) 14, may by the use appropriate restricting passageways 32, be inflated slightly subsequently to inflation of the principal inflatable tubular member(s) 14, or further alternately may be inflated separately from the principal inflatable tubular member 14 optionally on an inflation cycle wholly different from that characterizing the principal inflatable tubular member 14. Typically, where the members 14, 27 are inflated in a coordinated manner, the principal inflatable tubular member 14 is inflated first and then either deflated, or maintained in an inflated or partially inflated state while the additional tubular members 27 are subsequently inflated and then deflated. The particular cycle of inflation/deflation for all the members 14, 27 will to some extent be a function of the nature of the aerofoil or other surface being de-iced and the nature and extent of stress that can be accommodated by a particular material of construction forming the skin 12 and defining the ice accreting surface 13.

Where it is desired that the principal inflatable tubular member 14 be inflated extremely rapidly, that is in less than 0.10 seconds and more preferably in less than 0.50 milliseconds, it may be particularly advantageous to employ the interconnected additional tubes shown in Figure 3 together with the restricted passageway 32 shown in Figure 3 to effect inflation of additional tubular members 27. It should be apparent, that in Figure 3 the principal inflatable tubular member 14 is configured for chordwise orientation of the tubular members 27. By chordwise orientation, what is meant is a manner generally perpendicular to an orientation of the principal inflatable tubular members 14 where the principal inflatable tubular members 14 parallels in spanwise manner the leading edge of an aerodynamic structure such as a wing, strut or an aileron surface.

Referring to the drawings, Figure 4 shows an alternate pattern for chordwise orientation of additional inflatable tubular members 27 wherein an essentially continuous single tube forms an essentially chordwise pattern. Fluid under pressure for inflating tie additional inflatable tubular members 27 is provided through a conduit 20. The tubular member configuration of Figure 4 can also be used with the additional inflatable tubular members 27 oriented in a generally spanwise manner with respect to a leading edge profile.

Where it is desired that the principal inflatable member 14 be inflated in a rapid series of pulses, the use of a chattering valve can be of value.

Employing the de-icer of the instant invention, deleterious deterioration and damage of more traditional inflatable pneumatic de-icers positioned typically external upon an outer surface of the skin of an aircraft or other object to be de-iced is avoided where such deterioration or damage is engendered by reasons of ultra violet radiation, damage by object strike or rain or sand erosion. The de-icer of the instant invention lies sheltered beneath an outer skin having a substantially elevated modulus and upon which ice accretes and from which accreted ice is dislodged by inflation/deflation cycles of the inflation tubes.

## Claims

1. A de-icer for de-icing an object having a sheet-like skin (12,12') including an ice accreting surface (13), the skin (12,12') being formed of a material having a modulus of elasticity of at least 40,000 kPa, comprising:
a support surface (16) positioned obversely to the ice accreting surface (13),
at least one principal inflation tube (14),
a plurality of additional inflation tubes (17),
both, the principal inflation tube and the additional inflation tubes being positioned between the support surface (16) and the skin (12),
means for introducing a fluid under pressure into the principal inflation tube (14),
and means for subsequently deflating the principal inflation tube (14),
the means for introducing the fluid under pressure into the principal inflation tube (14) performing the introduction at a rate and in a quantity sufficient to inflate the principal inflation tube (14) within not more than 0.25 seconds without exceeding a stress level corresponding to an endurance limit associated with the material forming the skin (12), and
means to inflate the additional inflation tubes (27) by passing fluid under pressure employed to inflate the principal inflation tube (14) into the additional inflation tubes (27).

2. The de-icer of claim 1 further characterized in that the means for introducing the fluid under pressure into the principal inflation tube (14) performing the introduction either slowly or in a rapid series of pulses.

3. The de-icer of claim 1 or 2 characterized in that at least one of the principal and plurality of the additional inflation tubes (14,27) is formed from at least one ply of fabric coated on at least one surface with a rubberizing compound and vulcanizingly cured.

4. The de-icer of any of claims 1 through 3 characterized in that at least one of the inflation tubes (14,27) is affixed to the support surface.

5. The de-icer of claim 2 or 3 further characterized by including an intermediate ply (24) positioned intermediate the skin (12) and the support surface (16) to lie between the principal inflation tube (14) and the skin (12), the additional inflation tubes (27) being attached to the intermediate ply (24) and configured to lie between the intermediate ply (24) and the skin (12).

6. The de-icer of any of claims 1 through 5 including means for inflating and deflating the principal inflation tube (16) in a cyclical manner.

7. The de-icer of any of claims 1 through 6 characterized in that at least one principal inflation tube (14) includes a partitioning means dividing the principal inflation tube (14) into at least a pair of tubular compartments (18,18'), the partitioning means being configured to define the tubular compartments (18,18') in a spaced apart relationship sufficient whereby, upon inflation of the tubular structures, bending stress in the skin (12) induced by the inflation of parallel, spaced apart tubes does not exceed a bending microstrain in the material forming the skin (12) corresponding to a service life for the skin (12) and capable of accommodating at least a million cycles of inflation/deflation of the tubular structures.

8. The de-icer of any of claims 1 through 7 characterized in that the skin (12) is formed from one of titanium, aluminum, steel, including stainless steel, a plastic and a polymeric composite.

9. The de-icer of any of claims 1 through 8 characterized in that the means for inflating the additional inflation tubes (27) being at least one direction interconnection between the additional inflation tubes (27) and the principal inflation tube (14) configured whereby fluid employed in inflating the princial inflation tube (14) can thereafter pass into the additional inflation tubes (27) causing the inflation thereof subsequent to inflation of the principal inflation tube (14).

10. The de-icer of claim 9, the principal inflation tube (14) and additional inflation tubes (27) being affixed to the support surface (16).

11. The de-icer of any of claims 1 through 10 characterized in that the object to be de-iced is an aerofoil having an outer skin (12,12') formed of a material having a modulus of elasticity of at least 40,000 kPa, the aerofoil having a leading edge and trailing surface therefrom defined by the skin (12,12').

12. The de-icer of any of claim 1 through 11 wherein the interconnection between the additional inflation tubes (27) and the principal inflation tube (14) includes at least one restricted passageway (32).

13. The de-icer of any of claims 1 through 12 characterized in that the means for inflating the additional inflation tubes (27) performing the inflation in a way that the additional inflation tubes (27) become more slowly inflated than the principal inflation tube (14).

14. The de-icer of claim 13 characterized in that the means for inflating the additional inflation tubes (27) partially de-pressurize the principal inflation tube (14).

15. A method for de-icing an object having a shell-like skin (12) including an ice accreting surface (13), the skin (12) being possessed of a modulus of elasticity of at least 40,000 kPa, comprising the steps of:
employing a fluid under pressure,
periodically inflating within not more than 0.25 seconds at least one principal inflatable tubular structure (14) in a cavity between the skin (12) and a support surface (16) positioned obversely to the ice accreting surface (13) to a pressure sufficient to detach and dislodge accreted ice but insufficiently elevated whereby stresses placed upon the skin (12) do not exceed an endurance limit for the material from which the skin (12) is formed, and
inflating additional inflation tubes (27) by passing fluid under pressure employed to inflate the principal inflation tube (14) into the additional inflation tubes (27).

16. The method of claim 15 including the step of inflating the principal inflatable tubular structure (14) in a rapid series of pulses producing a series of near instantaneous distortions of the skin (12) overlying the inflatable tubular structure (14).

17. The method of any of claims 15 or 16 further characterized by the step of inflating a pair of principal inflatable tubular structures spaced apart one from the next to an extent sufficient to assure that, upon inflation, bending distortion of the skin (12) by reason of inflation does not exceed a microstrain corresponding to a substantial likelihood of fatigue failure of the skin (12) within a million inflation/deflation cycles of the tubes.

18. The method of any of claims 15 through 17 further characterized by including the step of inflating the additional inflation tubes (27) and simultaneously partially de-pressurizing the principal inflation tube (14).

19. The method of any of claims 14 through 18 further including the step of fully inflating the principal inflatable tubular structure (14) in a rapid series of pulses within not more than 0.10 seconds.

20. The method of any of claims 15 through 20 characterized in that the object is an airfoil having a leading edge associated therewith, the airofoil being configured to have a skin (12) having an ice accreting surface (13) and formed of a material having a modulus of elasticity of at least 40,000 kPa, the inflatable tube (14) extending spanwise along the leading edge and further comprising the steps of:
subsequently inflating employing the fluid under pressure utilized in inflating the spanwise inflation tube (14), a plurality of additional inflation tubes (27) positioned in one of a chordwise and spanwise relationship to the leading edge
and positioned between the support surface (16) and the skin (12); the inflation tube (14) and the additional inflation tubes (27) being directly connected for fluid flow therebetween, the inflation tube (14) and the additional inflation tubes (27) being inflated to an extent sufficient to produce a desired deformation in the skin (12)
sufficient to detach and dislodge ice accumulations on the ice accreting surface (13) thereof into an airstream flowing over the airfoil but to an extent insufficient to exceed a stress level associated with an endurance limit for the material forming the skin (12).

21. The method of claim 20 including the step of pulsatingly inflating the spanwise inflation tube (14).
